# EUROPÄISCHE PATENTSCHRIFT

(11) **EP 3 512 048 B1**
(45) Veröffentlichungstag und Bekanntmachung des Hinweises auf die Patenterteilung: **22.02.2023**
(21) Anmeldenummer: 19150189.9
(22) Anmeldetag: 03.01.2019
(51) Int. Cl.: H01R 13/56, H01R 13/59

(54) **KNICKSCHUTZ FÜR EIN KABEL**
ANTI-KINK SYSTEM FOR A CABLE
PROTECTION ANTI-COURBURE POUR UN CÂBLE

(30) Priorität: 15.01.2018 DE 102018200550
(43) Veröffentlichungstag der Anmeldung: 17.07.2019
(73) Patentinhaber: BizLink Industry Germany GmbH, 91154 Roth (DE)
(72) Erfinder: BACHMAIER, Walter, 26169 Friesoythe/Neuscharrel (DE)
(74) Vertreter: Frenkel, Matthias Alexander

(56) Entgegenhaltungen:
- DE-C1- 10 135 971
- DE-U1- 20 204 382
- DE-U1- 29 914 189
- US-A- 6 151 432
- US-A1- 2015 083 455

## Beschreibung

Die vorliegende Erfindung betrifft einen Knickschutz für ein Kabel. Ferner betrifft die vorliegende Erfindung ein Verfahren zum Montieren eines derartigen Knickschutzes für ein Kabel.

Ein Kabelknickschutz soll verhindern, dass die Kabel bei der Verbindung mit einem Gehäuseteil gebogen oder geknickt werden, wodurch die Kabel beschädigt werden können. Ein solches Gehäuseteil kann beispielsweise ein Tüllengehäuse oder ein Steckergehäuse sein. Ein Kabelknickschutz weist eine Knickschutztülle auf, die mit dem Kabel verbunden ist. Die Knickschutztülle soll das Kabel im Bereich der Durchführöffnung des Gehäuseteils schützen und kann dazu die beim Biegen oder Bewegen des Kabels entstehenden Kräfte aufnehmen. Auf diese Weise können Beschädigungen des Kabels verhindert werden. Ein solcher Kabelknickschutz ist beispielsweise aus dem Dokument DE 101 35 971 C1 bekannt.

US 2015/0083455 A1 offenbart ein Patchkabel, das ein Kabel und einen Verbinder umfasst. Der Verbinder umfasst ein Verbindergehäuse, einen Kontaktträger und eine Zugentlastungseinheit.

DE 299 14 189 U1 offenbart eine Befestigungseinrichtung für ein Kabel an einem Gehäuse.

DE 202 04 382 U1 offenbart ein Gehäuse mit einem Trägerelement für ein Anschlusselement.

Es besteht ein Bedarf für einen Kabelknickschutz mit einem vereinfachten Aufbau, der einfach montierbar und demontierbar ist.

Ein solcher Bedarf wird durch den Gegenstand der Ansprüche erfüllt.

Gemäß einem Aspekt wird ein Knickschutz für ein Kabel mit den Merkmalen des Patentanspruchs 1 bereitgestellt. Der Knickschutz für ein Kabel umfasst:
eine Knickschutztülle, die an einem Kabel festlegbar ist, wobei die Knickschutztülle wenigstens ein erstes Rastelement aufweist,
ein erstes Verbindungselement, das eine Öffnung zum Durchführen der Knickschutztülle aufweist, wobei das erste Verbindungselement wenigstens ein zweites Rastelement aufweist,
ein zweites Verbindungselement, das mit dem ersten Verbindungselement verbindbar ist,
wobei das wenigstens eine erste Rastelement und das wenigstens eine zweite Rastelement derart ausgebildet sind, dass sie in einer ersten Stellung der Knickschutztülle relativ zu dem ersten Verbindungselement eine Bewegung der Knickschutztülle durch die Öffnung des ersten Verbindungselements zulassen und in einer zweiten Stellung der Knickschutztülle relativ zu dem ersten Verbindungselement miteinander verrastbar sind, wobei die Knickschutztülle Führungsvorsprünge aufweist, die zueinander versetzt sind und zwischen sich wenigstens eine Führungsbahn zum Durchführen des wenigstens einen zweiten Rastelements des ersten Verbindungselements in der ersten Stellung ausbilden, wobei das wenigstens eine erste Rastelement und/oder das wenigstens eine zweite Rastelement derart ausgebildet sind, dass sie in der zweiten Stellung einen in Umfangsrichtung der Knickschutztülle und/oder des ersten Verbindungselements wirkenden Formschluss herstellen.

In der zweiten Stellung können das wenigstens eine erste Rastelement und das wenigstens eine zweite Rastelement eine Bewegung der Knickschutztülle durch die Öffnung des ersten Verbindungselements blockieren. Dieser Zustand kann durch Verbinden des ersten Verbindungselements mit dem zweiten Verbindungselement fixiert werden.

Die Knickschutztülle und das erste Verbindungselement und damit auch das wenigstens eine erste Rastelement und das wenigstens eine zweite Rastelement können durch eine Relativbewegung zwischen der Knickschutztülle und dem ersten Verbindungselement aus der ersten Stellung in die zweite Stellung überführt werden. Gleiches kann für die Überführung aus der zweiten Stellung zurück in die erste Stellung gelten.

Die Relativbewegung zur Überführung der Knickschutztülle und/oder des ersten Verbindungselements von der ersten Stellung in die zweite Stellung und zurück kann eine Drehbewegung der Knickschutztülle relativ zu dem ersten Verbindungselement sein. Alternativ kann die Relativbewegung auch eine Drehbewegung des ersten Verbindungselements relativ zur Knickschutztülle sein. Die Drehbewegung oder die Relativverdrehung zwischen der Knickschutztülle und dem ersten Verbindungselement kann über einen vorbestimmten Winkelbetrag ausgeführt werden, um die Knickschutztülle und/oder das zweite Verbindungselement zwischen der ersten Stellung und der zweiten Stellung zu verlagern. Der Winkelbetrag kann zwischen 20° und 70° sein. Beispielsweise kann der Winkelbetrag der Relativverdrehung 45° betragen.

Das wenigstens eine erste Rastelement und das wenigstens eine zweite Rastelement sind derart ausgebildet, dass sie in der zweiten Stellung einen in Umfangsrichtung der Knickschutztülle und/oder des ersten Verbindungselements wirkenden Formschluss herstellen. Das wenigstens eine erste Rastelement und das wenigstens eine zweite Rastelement können durch den Formschluss einen Verdrehschutz bilden, der eine Verdrehung zwischen der Knickschutztülle und dem ersten Verbindungselement verhindert.

Die Knickschutztülle weist Führungsvorsprünge auf. Die Führungsvorsprünge können sich in radialer Richtung nach außen erstrecken. Mit anderen Worten können die Führungsvorsprünge in radialer Richtung von der Außenumfangsfläche der Knickschutztülle vorstehen. Die Führungsvorsprünge können sich in axialer Richtung entlang der Außenumfangsfläche der Knickschutztülle erstrecken. Die Führungsvorsprünge können sich über einen vorbestimmten Abschnitt der axialen Erstreckung der Knickschutztülle erstrecken. Insbesondere können die Führungsvorsprünge an einem Endabschnitt der Knickschutztülle angeordnet sein. Beispielsweise können sich die Führungsvorsprünge ausgehend von einem Ende der Knickschutztülle in Richtung des jeweils anderen Endes der Knickschutztülle erstrecken. Die Führungsvorsprünge können voneinander beabstandet und zueinander versetzt sein. Die Führungsvorsprünge können um einen vorbestimmten Winkelbetrag zueinander versetzt an der Knickschutztülle vorgesehen sein. Beispielsweise können die Führungsvorsprünge um 90° zueinander versetzt an der Knickschutztülle angeordnet sein. Es können beispielsweise vier Führungsvorsprünge an der Knickschutztülle vorgesehen sein.

Die Führungsvorsprünge bilden zwischen sich wenigstens eine Führungsbahn für das wenigstens eine zweite Rastelement des ersten Verbindungselements aus. Die Führungsvorsprünge können die wenigstens eine Führungsbahn in Umfangsrichtung der Knickschutztülle zwischen sich festlegen. Die Führungsbahn kann sich zwischen benachbarten Führungsvorsprüngen in axialer Richtung erstrecken. In der ersten Stellung kann das wenigstens eine zweite Rastelement in der wenigstens einen Führungsbahn abschnittsweise aufgenommen sein. Die wenigstens eine Führungsbahn kann mit dem wenigstens einen zweiten Rastelement zusammenwirken, um in der ersten Stellung die Bewegung der Knickschutztülle durch die Öffnung in dem ersten Verbindungselement zumindest abschnittsweise zu führen. Durch das Zusammenwirken der Führungsvorsprünge bzw. der Führungsbahnen mit dem wenigstens einen zweiten Rastelement können sich die Knickschutztülle und das wenigstens eine Verbindungselement aneinander zentrieren.

Zumindest einige der Führungsvorsprünge der Knickschutztülle können jeweils wenigstens ein erstes Rastelement aufweisen. Anders ausgedrückt können einige der Führungsvorsprünge ein erstes Rastelement aufweisen, wohingegen andere der Führungsvorsprünge kein erstes Rastelement aufweisen. Die Führungsvorsprünge mit einem ersten Rastelement und die Führungsvorsprünge ohne zweites Rastelement können wechselweise angeordnet sein. Beispielsweise können die Führungsvorsprünge mit und ohne erstes Rastelement in Umfangsrichtung der Knickschutztülle wechselweise angeordnet sein. Die Führungsvorsprünge mit und ohne erstes Rastelement können zueinander versetzt sein. Dieser Versatz kann beispielsweise 90° betragen. In diesem Fall können die Führungsvorsprünge mit einem ersten Rastelement um 180° zueinander versetzt sein. Gleiches gilt für die Führungsvorsprünge ohne erstes Rastelement. Alternativ können sämtliche Führungsvorsprünge der Knickschutztülle jeweils wenigstens ein erstes Rastelement aufweisen.

Die Führungsvorsprünge können aus demselben Material wie die Knickschutztülle hergestellt sein. Die Führungsvorsprünge können an die Knickschutztülle angeformt sein. Die Führungsvorsprünge können einstückig mit der Knickschutztülle ausgebildet sein. Die Knickschutztülle kann zusammen mit den Führungsvorsprüngen beispielsweise durch ein Spritzgussverfahren hergestellt werden.

Das wenigstens eine zweite Rastelement kann in einem axialen Endbereich der Öffnung des ersten Verbindungselements angeordnet sein. Das wenigstens eine zweite Rastelement kann einstückig mit dem ersten Verbindungselement ausgebildet sein. Das wenigstens eine zweite Rastelement kann den Innendurchmesser der Öffnung des ersten Verbindungselements zumindest abschnittweise verringern.

Das wenigstens eine erste Verbindungselement kann mehrere zweite Rastelemente aufweisen. Die zweiten Rastelemente können voneinander beabstandet und in Umfangsrichtung zueinander versetzt in der Öffnung des ersten Verbindungselements angeordnet sein. Die zweiten Rastelemente können sich ausgehend von der Innenumfangsfläche der Öffnung radial einwärts erstrecken. Die zweiten Rastelemente können den Innendurchmesser der Öffnung abschnittsweise reduzieren. Der Innendurchmesser der Öffnung kann durch einander gegenüberliegende zweite Rastelemente derart reduziert werden, dass der Innendurchmesser im Bereich der zweiten Rastelemente kleiner als der Außendurchmesser der Knickschutztülle im Bereich der Führungsvorsprünge.

Das wenigstens eine erste Rastelement kann eine Rastausnehmung sein. Die Rastausnehmung kann das wenigstens eine zweite Rastelement zumindest abschnittsweise aufnehmen. Die Rastausnehmung kann einen Anschlag für das wenigstens eine zweite Rastelement bilden. Die Rastausnehmung kann nach radial außen und in Richtung eines Endes der Knickschutztülle, d.h. in axialer Richtung, geöffnet sein. Dadurch kann das wenigstens eine zweite Rastelement in die Rastausnehmung eingeführt werden.

Das wenigstens eine zweite Rastelement kann einen Rastvorsprung sein. Der Rastvorsprung kann radial einwärts vorstehen. Der Rastvorsprung kann ausgehend von der Innenumfangsfläche der Öffnung in dem ersten Verbindungselement radial einwärts vorstehen. Der Rastvorsprung kann sich über einen vorbestimmten Abschnitt der Innenumfangsfläche der Öffnung erstrecken. Der Rastvorsprung kann eine gewölbte Fläche aufweisen, die das radial innere Ende des Rastvorsprungs bildet. Die Wölbung dieser Fläche kann auf den Radius der Knickschutztülle im Bereich der wenigstens einen Führungsbahn abgestimmt sein.

Gemäß einem weiteren Aspekt wird ein Verfahren zum Montieren eines Knickschutzes für ein Kabel gemäß dem Patentanspruch 8 bereitgestellt. Das Verfahren umfasst die folgenden Schritte:
Verlagern der Knickschutztülle und/oder des ersten Verbindungselements in die erste Stellung, in der das wenigstens eine erste Rastelement und das wenigstens eine zweite Rastelement eine Bewegung der Knickschutztülle durch die Öffnung des ersten Verbindungselements zulassen, wobei die Knickschutztülle Führungsvorsprünge aufweist, die zueinander versetzt sind und zwischen sich wenigstens eine Führungsbahn zum Durchführen des wenigstens einen zweiten Rastelements des ersten Verbindungselements in der ersten Stellung ausbilden;
Bewegen der Knickschutztülle und des damit verbundenen Kabels durch die Öffnung des ersten Verbindungselements, wobei sich die Knickschutztülle und das erste Verbindungselement in der ersten Stellung befinden;
Zurückziehen der Knickschutztülle und des Kabels in der ersten Stellung durch die Öffnung in dem ersten Verbindungselement, wobei sich die Knickschutztülle und das erste Verbindungselement in der ersten Stellung befinden;
Verlagern der Knickschutztülle und/oder des ersten Verbindungselements in die zweite Stellung, in der das wenigstens eine erste Rastelement und das wenigstens eine zweite Rastelement verrastbar sind, wobei das wenigstens eine erste Rastelement und/oder das wenigstens eine zweite Rastelement derart ausgebildet sind, dass sie in der zweiten Stellung einen in Umfangsrichtung der Knickschutztülle und/oder des ersten Verbindungselements wirkenden Formschluss herstellen;
Verrasten des wenigstens einen ersten Rastelements und des wenigstens einen zweiten Rastelements miteinander; und
Verbinden des ersten Verbindungselements und des zweiten Verbindungselements.

Nachdem das erste Rastelement und das zweite Rastelement in die zweite Stellung verlagert worden sind, können das erste Rastelement und das zweite Rastelement durch eine axiale Bewegung zwischen der Knickschutztülle und dem ersten Verbindungselement miteinander verrastet werden. Die Verlagerung aus der ersten Stellung in die zweite Stellung und zurück kann beispielsweise durch eine Relativverdrehung um einen vorbestimmten Winkelbetrag zwischen der Knickschutztülle und dem ersten Verbindungselement erfolgen. Der Winkelbetrag, um den beispielsweise die Knickschutztülle relativ zu dem ersten Verbindungselement verlagert wird, kann zwischen 20° und 70° sein. Beispielsweise kann der Winkelbetrag 45° betragen.

Vor dem Zurückziehen der Knickschutztülle kann noch ein Schritt zum Konfektionieren des Endes des Kabels und/oder zum Anbringen eines Steckverbinders ausgeführt werden.
- Figuren 1 bis 3: Ansichten einer Knickschutztülle gemäß einer ersten Ausführungsform;
- Figuren 4 bis 7: Ansichten eines ersten Verbindungselements;
- Figuren 8 bis 12: Ansichten eines zweiten Verbindungselements; und
- Figuren 13 bis 16: Ansichten einer Knickschutztülle gemäß einer zweiten Ausführungsform.

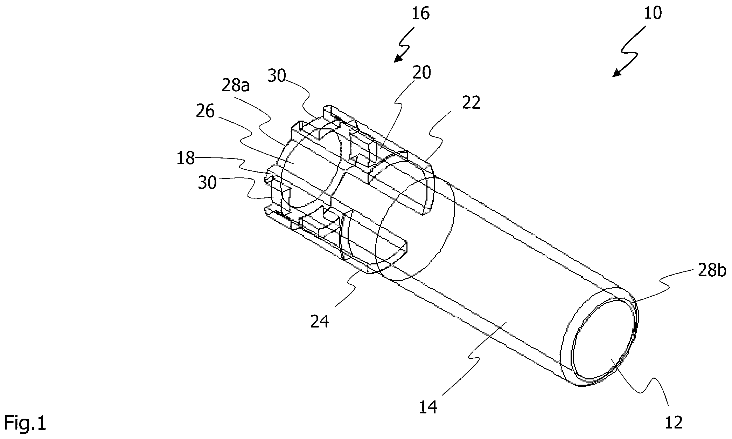

Figur 1 zeigt eine perspektivische Ansicht einer Knickschutztülle 10. Die Knickschutztülle 10 weist eine Öffnung 12 auf, die sich vollständig durch die Knickschutztülle 10 erstreckt. Die Öffnung 12 dient zur Verbindung der Knickschutztülle 10 mit einem Kabel (nicht gezeigt). Die Knickschutztülle 10 kann an einem Kabel festgelegt werden. Die Knickschutztülle 10 kann beispielsweise auf ein Kabel mittels eines Spritzgussverfahrens aufgespritzt oder anderweitig mit dem Kabel fest verbunden werden.

Die Knickschutztülle 10 hat einen im Wesentlichen rohrförmigen Abschnitt 14 und einen Verbindungsabschnitt 16. Der Verbindungsabschnitt 16 ist kürzer als der rohrförmige Abschnitt 14. Die Knickschutztülle 10 weist in dem Verbindungsabschnitt 16 Führungsvorsprünge 18, 20, 22 und 24 auf. Die Führungsvorsprünge 18, 20, 22, 24 sind einstückig mit der Knickschutztülle 10 ausgebildet. Die Führungsvorsprünge 18, 20, 22, 24 erstrecken sich von der Außenumfangsfläche der Knickschutztülle 10 in radialer Richtung nach außen. Die Führungsvorsprünge 18, 20, 22 und 24 sind in Umfangsrichtung der Knickschutztülle 10 zueinander versetzt an der Außenumfangsfläche der Knickschutztülle 10 ausgebildet. Die Führungsvorsprünge 18, 20, 22, 24 bilden zwischen sich Führungsbahnen aus, von denen in Figur 1 nur die Führungsbahn 26 erkennbar ist. Die Führungsbahnen erstrecken sich in Umfangsrichtung der Knickschutztülle 10 zwischen zwei benachbarten Führungsvorsprüngen 18, 20, 22, 24. Die Führungsbahn 26 erstreckt sich zwischen den benachbarten Führungsvorsprüngen 18 und 20. Die Führungsvorsprünge 18, 20, 22, 24 erstrecken sich ausgehend von einem Ende 28a der Knickschutztülle 10 im Verbindungsabschnitt 16 in Richtung des anderen Endes 28b der Knickschutztülle 10. Die Führungsvorsprünge 18, 20, 22, 24 weisen jeweils eine Rastausnehmung 30 auf, die sich ausgehend von dem Ende 28a der Knickschutztülle 10 in die Führungsvorsprünge 18, 20, 22, 24 hinein erstreckt.

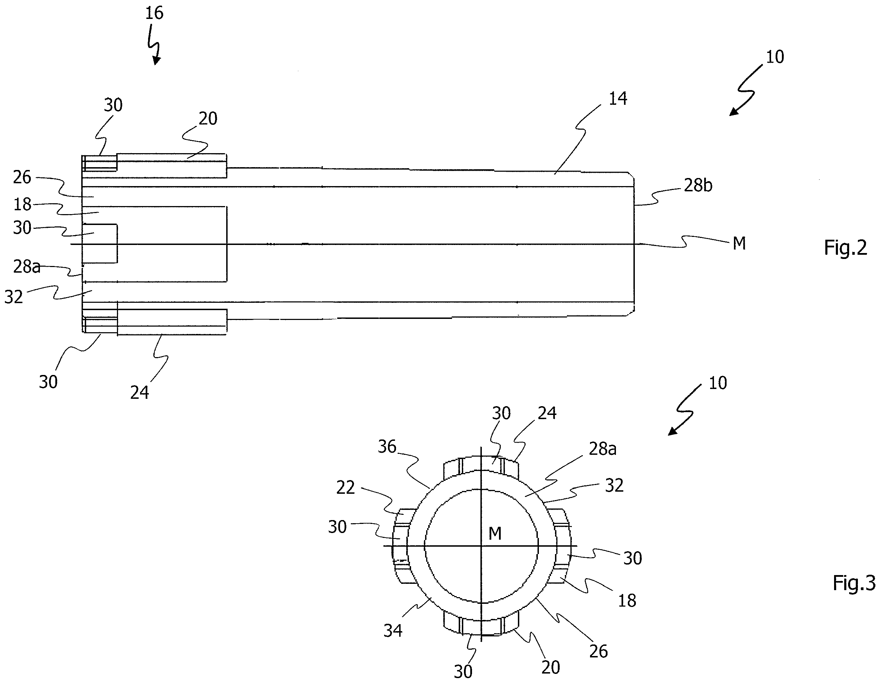

Figur 2 zeigt eine Seitenansicht der Knickschutztülle 10. In Figur 2 ist die Achse M der Knickschutztülle 10 eingetragen. In Figur 2 sind diese Führungsvorsprünge 18, 20 und 24 erkennbar, die jeweils eine Rastausnehmung 30 aufweisen. Die Rastausnehmung 30 erstreckt sich ausgehend von dem Ende bzw. der Endfläche 28a der Knickschutztülle 10 in die Führungsvorsprünge 18, 20, 24 hinein. Die Rastausnehmung 30 ist in Richtung der Endfläche 28a der Knickschutztülle 10 geöffnet. Die Führungsvorsprünge 18, 20 und 24 legen zwischen sich die Führungsbahnen 26 und 32 fest. Die Führungsbahnen 26 und 32 erstrecken sich in Richtung der Achse M entlang der Führungsvorsprünge 18, 20, 24. Die Erstreckung des Verbindungsabschnitts 16 in Richtung der Achse M ist erheblich kürzer als die Erstreckung des rohrförmigen Abschnitts 14 in Richtung der Längsachse M. Ausgehend von dem Ende 28a der Knickschutztülle 10 nehmen der Verbindungsabschnitt 16 und damit auch die Führungsvorsprünge 18, 20, 24 einen vorbestimmten Teil der gesamten Erstreckung der Knickschutztülle 10 ein.

Figur 3 zeigt eine Draufsicht der Knickschutztülle 10. In Figur 3 wird die Knickschutztülle 10 mit Blickrichtung auf das Ende 28a (siehe Figur 2) betrachtet. Die Führungsvorsprünge 18, 20, 22, 24 sind in Umfangsrichtung zueinander versetzt an der Knickschutztülle 10 ausgebildet. Die Führungsvorsprünge 18, 20, 22, 24 sind um 90° um die Achse M zueinander versetzt an der Knickschutztülle 10 ausgebildet. Die Führungsvorsprünge 18, 20, 22, 24 legen zwischen sich die Führungsbahnen 26, 32, 34 und 36 fest. Jeder der Führungsvorsprünge 18, 20, 22, 24 weist eine Rastausnehmung bzw. eine Rastnut 30 auf, die zum Ende 28a der Knickschutztülle 10 hin geöffnet ist.

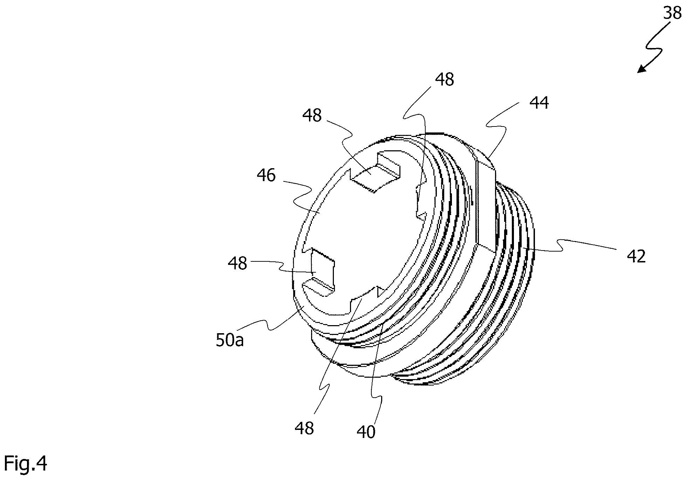

Figur 4 zeigt eine perspektivische Ansicht eines ersten Verbindungselements 38. Das Verbindungselement 38 weist zwei Gewindeabschnitte 40 und 42 mit einem Außengewinde auf, die über einen Anlageabschnitt 44 voneinander getrennt sind. Durch das erste Verbindungselement 38 erstreckt sich eine Öffnung 46. Ausgehend von der Innenumfangsfläche der Öffnung 46 erstrecken sich Rastvorsprünge 48 radial einwärts. Die Rastvorsprünge 48 weisen eine vorbestimmte axiale Erstreckung auf, mit der sie sich ausgehend von der Stirnfläche 50a entlang der Innenumfangsfläche der Öffnung 46 erstrecken. Die Rastvorsprünge 48 sind in Umfangsrichtung des ersten Verbindungselements 38 zueinander versetzt angeordnet.

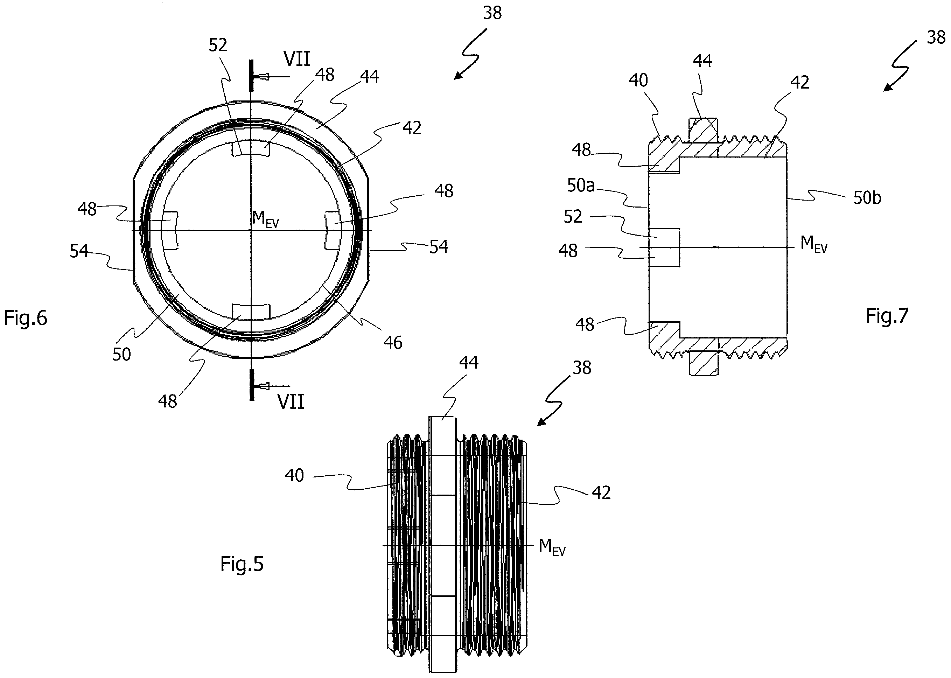

Figur 5 zeigt eine Seitenansicht des Verbindungselements 38, in der die beiden Gewindeabschnitte 40 und 42 gezeigt sind. Die Gewindeabschnitte 40 und 42 werden von einem sich in radialer Richtung erstreckenden und über die Gewindeabschnitte 40 und 42 radial vorstehenden Anlageabschnitt 44 voneinander getrennt. Der Anlageabschnitt 44 ist in Richtung der Achse M_{EV} zwischen den Gewindeabschnitte 40 und 42 angeordnet.

Figur 6 zeigt eine Draufsicht des ersten Verbindungselements 38. Durch das Verbindungselement 38 erstreckt sich die Öffnung 46. Ausgehend von der Innenumfangsfläche der Öffnung 46 erstrecken sich die Rastvorsprünge 48 radial einwärts. Die Rastvorsprünge 48 sind um 90° zueinander versetzt in der Öffnung 46 ausgebildet. Jeweils zwei einander gegenüberliegende Rastvorsprünge 48 verringern zwischen sich den Innendurchmesser der Öffnung 46. Radial innere Flächen 52 von gegenüberliegenden Rastvorsprüngen 48 legen zwischen sich den reduzierten Innendurchmesser der Öffnung 46 fest. Die radial innere Fläche 52 der Rastvorsprünge ist gewölbt ausgebildet. Der Grad der Wölbung der Fläche 52 kann auf den Radius der Knickschutztülle 10 im Bereich der Führungsbahnen 26, 32, 34, 36 abgestimmt sein (siehe Figuren 1 bis 3).

An dem Anlageabschnitt 44 sind abgeflachte Bereiche 54 erkennbar, d.h. der Anlageabschnitt 44 ist nicht kreisförmig ausgebildet. An den Abflachungen 54 kann ein Werkzeug angesetzt werden. Die Abflachungen 54 bilden sogenannte Schlüsselflächen, an denen beispielsweise ein Schraubenschlüssel (nicht gezeigt) angesetzt werden kann. Das Werkzeug oder der Schraubenschlüssel kann beispielsweise zum Gegenhalten des ersten Verbindungselements 38 verwendet werden.

Figur 7 zeigt eine Schnittansicht entlang der Schnittlinie VII-VII in Figur 6. Die Rastvorsprünge 48 sind im Bereich des Gewindeabschnitts 40 vorgesehen. Ausgehend von der Stirnfläche 50a erstrecken sich die Rastvorsprünge 48 in Richtung der Achse M_{EV} bzw. in Richtung der Stirnfläche 50b entlang der Innenumfangsfläche der Öffnung 46. Die Rastvorsprünge 48 erstrecken sich zwischen der Stirnfläche 50a und dem Anlageabschnitt 44, wobei die Rastvorsprünge 48 nicht bis zu dem Anlageabschnitte 44 reichen.

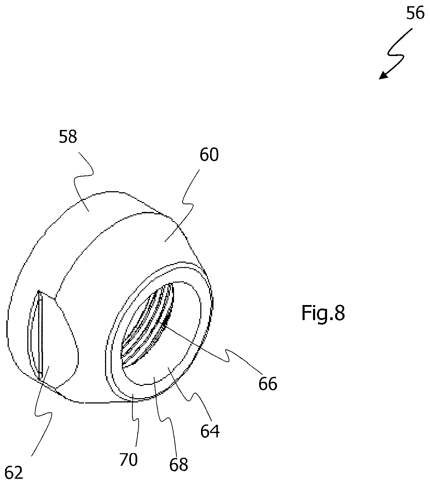

Figur 8 zeigt eine perspektivische Ansicht eines zweiten Verbindungselements 56. Das zweite Verbindungselement 56 ist in Form einer Überwurfmutter ausgebildet. Das zweite Verbindungselement 56 hat einen im Wesentlichen zylindrischen Abschnitt 58 und einem im Wesentlichen konischen Abschnitt 60. Ferner ist an dem Verbindungselement 56 ein abgeflachter Bereich 62 ausgebildet. Durch das zweite Verbindungselement 56 erstreckt sich eine Öffnung 64. Die Öffnung 64 hat einen Gewindeabschnitt 66 und einen zylindrischen Abschnitt 68, der sich ausgehend von der Stirnseite 70 in die Öffnung 66 hinein erstreck.

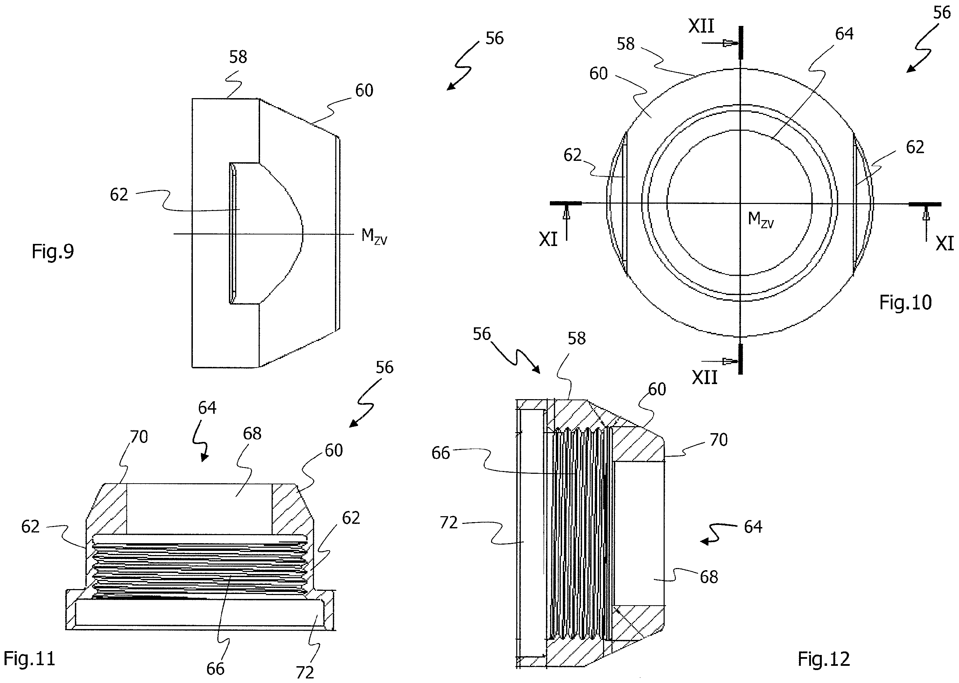

Figur 9 zeigt eine Seitenansicht und Figur 10 eine Draufsicht des zweiten Verbindungselements 56. Der abgeflachte Bereich 62 erstreckt sich teilweise entlang des zylindrischen Abschnitts 58 und des konischen Abschnitts 60. Wie in Figur 10 erkennbar ist, sind zwei abgeflachte Bereiche 62 vorgesehen. An den Bereichen 62, die sogenannte Schlüsselfläche bilden, kann ein Werkzeug an dem zweiten Verbindungselement 56 angesetzt werden. Hierfür kann beispielsweise ein Schraubenschlüssel verwendet werden. Das Werkzeug kann zum Verschrauben des zweiten Verbindungselements 56 mit dem ersten Verbindungselement 38 dienen. Beim Verschrauben kann das erste Verbindungselement 38 mit einem Werkzeug an den Abflachungen 54 gegengehalten werden.

Figur 11 zeigt eine Schnittansicht entlang der Schnittlinie XI-XI in Figur 10. Durch das zweite Verbindungselement 56 erstreckt sich die Öffnung 64. Die Öffnung 64 ist gestuft ausgebildet. Die Öffnung 64 hat im Wesentlichen drei Abschnitte, die sich in ihrem Innendurchmesser unterscheiden. Der Abschnitt 68 mit dem kleinsten Innendurchmesser ist im Wesentlichen zylindrisch ausgebildet und erstreckt sich ausgehend von der Stirnseite 70 bis zu dem Gewindeabschnitt 66. An den Abschnitt 68 schließt sich der Gewindeabschnitt 66 an, der einen größeren Innendurchmesser als der zylindrische Abschnitt 68 aufweist. An den Gewindeabschnitt 66 schließt sich ein Aufnahmeabschnitt 72 an, der wiederum einen größeren Innendurchmesser als der Gewindeabschnitt 66 aufweist. Der Aufnahmeabschnitt 72 dient zur Aufnahme des Anlageabschnitts 44 des ersten Verbindungselements 38 (siehe Figur 4 bis 7), wenn der Gewindeabschnitt 66 des zweiten Verbindungselements 56 mit dem Gewindeabschnitt 42 des ersten Verbindungselements 38 verschraubt wird. Das zweite Verbindungselement 56 kann mit einem Werkzeug (nicht gezeigt), das an den abgeflachten Bereichen 62 angesetzt wird, mit dem ersten Verbindungselement 38 verschraubt werden.

Figur 12 zeigt eine Schnittansicht entlang der Schnittlinie XII-XII in Figur 10. In Figur 12 sind der zylindrische Abschnitt 58 und der konische Abschnitt 60 des zweiten Verbindungselements 56 erkennbar. Durch das zweite Verbindungselement 56 erstreckt sich gestuft die Öffnung 64 mit ihren drei Abschnitten 66, 68 und 72, die jeweils einen unterschiedlichen Innendurchmesser aufweisen.

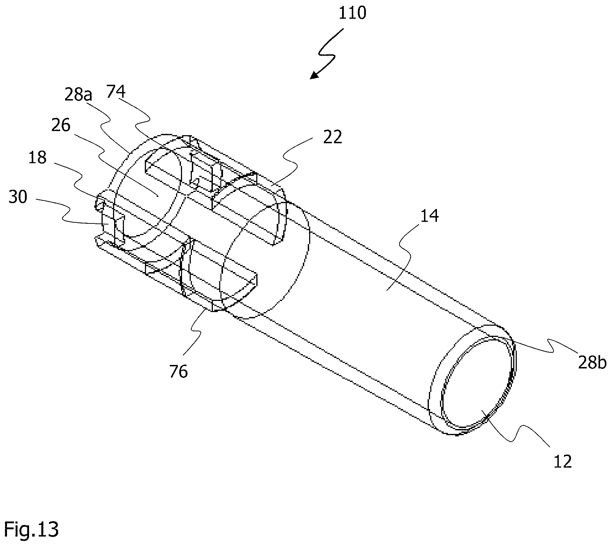

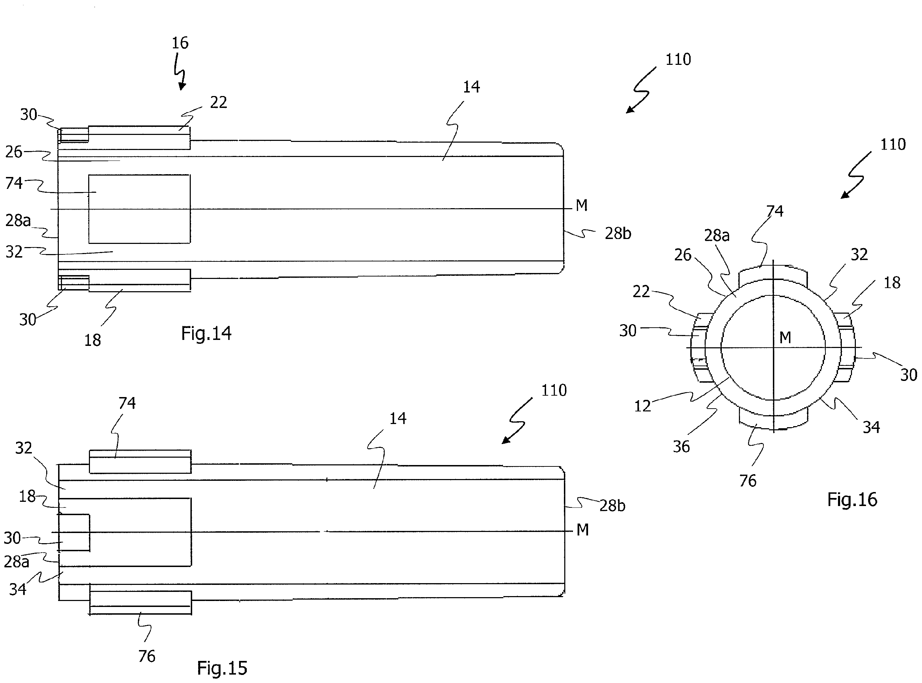

Die Figuren 13 bis 16 zeigen Ansichten einer Knickschutztülle 110 gemäß einer zweiten Ausführungsform. Für gleichartige Merkmale werden dieselben Bezugszeichen wie bei der ersten Ausführungsform verwendet. Die wesentlichen Unterschiede zwischen der mit Bezug auf die Figuren 1 bis 4 beschriebenen Knickschutztülle gemäß der ersten Ausführungsform und der Knickschutztülle 110 liegen in den Führungsvorsprüngen. Die Knickschutztülle 110 weist Führungsvorsprünge 18, 22, 74, 76 auf. Anders als bei der mit Bezug auf die Figuren 1 bis 4 beschriebenen Ausführungsform weisen lediglich die Führungsvorsprünge 18 und 22 Rastausnehmungen 30 auf. Die Führungsvorsprünge 74 und 76 dienen ausschließlich als Führungsvorsprung. Die Führungsvorsprünge 18, 22, 74, 76 legen zwischen sich Führungsbahnen 26, 32, 34, 36 fest. Die Führungsvorsprünge 18 und 22 erstrecken sich ausgehend von der Endfläche 28a in Richtung der Achse M entlang der Knickschutztülle 110. Die Vorsprünge 74 und 76 ohne Rastausnehmung 30 weisen in Richtung der Achse M einen Abstand zu der Endfläche 28a auf.

Im Folgenden wird die Funktion und das Zusammenwirkten der voranstehend im Detail beschriebenen Komponenten beschrieben, die den Knickschutz für ein Kabel bilden. Der Knickschutz für ein Kabel wird von der Knickschutztülle 10, dem ersten Verbindungselement 38 und dem zweiten Verbindungselement 56 gebildet. Die Rastvorsprünge 48 des ersten Verbindungselements 38 wirken mit den Führungsbahnen 26, 32, 34 und 36 zusammen, um die Knickschutztülle 10 durch die Öffnung 46 in dem ersten Verbindungselement 38 führen zu können. Dazu werden das ersten Verbindungselement 38 und die Knickschutztülle 10 so ausgerichtet, dass die Rastvorsprünge 48 des ersten Verbindungselements 38 in die von den Führungsvorsprünge 18, 20, 22, 24 der Knickschutztülle 10 festgelegten Führungsbahnen 26, 32, 34 und 36 eingreifen (erste Stellung). In diesem Zustand kann die Knickschutztülle 10 relativ zu dem ersten Verbindungselement 38 durch die Öffnung 46 in dem ersten Verbindungselement 38 geführt werden. Die ineinander eingreifenden Rastvorsprünge 48 und Führungsvorsprünge 18, 20, 22, 24 zentrieren die Knickschutztülle 10 an dem ersten Verbindungselement 38, sodass eine geführte Bewegung der Knickschutztülle 10 relativ zu dem ersten Verbindungselement 38 möglich ist.

Für die Konfektionierung kann die Knickschutztülle zusammen mit einem Kabel in der ersten Stellung somit ungehindert durch das erste Verbindungselement 38 geführt werden. Im Anschluss daran kann das Kabel (nicht gezeigt) konfektioniert oder mit einem Steckverbinder verbunden werden. Nach Beendigung der Konfektionierung wird die Knickschutztülle 10 zurückgezogen und erneut durch die Öffnung 46 in dem ersten Verbindungselement 38 geführt. Dabei befinden sind die Knickschutztülle 10 und das erste Verbindungselement 38 in der ersten Stellung. Sobald die Führungsbahnen 26, 32, 34 und 36 die zweiten Rastelemente 48 vollständig freigegeben, kann die Knickschutztülle 10 relativ zu dem ersten Verbindungselement 38 verdreht werden. Beispielsweise kann die Knickschutztülle 10 um 45° relativ zu dem ersten Verbindungselement 38 verdreht werden. Durch die Verdrehung befinden sich die Rastausnehmungen 30 und die Rastvorsprünge 48 im Wesentlichen in einer Flucht (zweite Stellung). In dieser (zweiten) Stellung sind die Rastvorsprünge 48 an dem ersten Verbindungselement 38 mit den Rastausnehmungen 30 der Führungsvorsprünge 18, 20, 22, 24 verrastbar.

Durch eine Bewegung in axialer Richtung können die Rastausnehmungen 30 und die Rastvorsprünge 48 verrastet werden. Im verrasteten Zustand können die Knickschutztülle 10 und das erste Verbindungselement 38 nicht mehr relativ zueinander verdreht werden. Ferner wird eine Relativbewegung der Knickschutztülle 10 relativ zu dem ersten Verbindungselement 38 durch die einen Anschlag für die Rastvorsprünge 48 bildenden Rastausnehmungen 30 blockiert. Die Rastvorsprünge 48 stellen somit mit den Rastausnehmungen 30 einen Formschluss her. Der Formschluss zwischen den Rastvorsprüngen 48 und den Rastausnehmungen 30 wirkt in Umfangsrichtung und auch in axialer Richtung der Knickschutztülle 10 bzw. des ersten Verbindungselement 38. Die Knickschutztülle 10 kann aufgrund des Formschlusses zwischen den Rastvorsprünge 48 und den Rastausnehmungen 30 nicht mehr relativ zu dem ersten Verbindungselement 38 verdreht werden. Durch den Formschluss kann auch ein Verdrehschutz bereitgestellt werden. Durch die Verschraubung des Gewindeabschnitts 66 des zweiten Verbindungselement 56 mit dem Gewindeabschnitt 42 des ersten Verbindungselement 38 liegt ein Formschluss zwischen der Knickschutztülle 10, dem ersten Verbindungselement 38 und dem zweiten Verbindungselement 56 vor.

Die Montage des Knickschutzes wird durch die Verbindung des zweiten Verbindungselements 56 mit dem ersten Verbindungselement 38 abgeschlossen. Das zweite Verbindungselement 56 fixiert die Knickschutztülle 10 und das erste Verbindungselement 38 in der zweiten Stellung aneinander. Sind das erste Verbindungselement 38 und das zweite Verbindungselement 56 miteinander verschraubt, nimmt der Aufnahmeabschnitt 72 des zweiten Verbindungselements 56 den Anlageabschnitt 44 des ersten Verbindungselements 38 auf.

Die Montage des Knickschutzes erfolgt auf die gleiche Weise, wenn eine Konfektionierung bereits erfolgt oder nicht notwendig ist. In diesem Fall kann der Konfektionierschritt entfallen.

Der voranstehend beispielhaft beschriebene Knickschutz für ein Kabel weist einen vereinfachten Aufbau auf. Der Knickschutz kann schnell und einfach montiert und demontiert werden. Durch die einfache Montage bzw. Demontage kann der Knickschutz schnell und einfach gereinigt werden. Unter anderem aus diesem Grund ist der Knickschutz auch für den Einsatz im Medizinbereich geeignet. Der Knickschutz kann somit zusammen mit medizinischen Geräten verwendet werden.

Die Aspekte und Merkmale, die zusammen mit einem oder mehreren der vorangehend detailliert beschriebenen Beispiele und Figuren erwähnt und beschrieben wurden, können ferner mit einem oder mehreren der anderen Beispiele kombiniert werden, um ein ähnliches Merkmal des anderen Beispiels zu ersetzen oder um das Merkmal zusätzlich in das andere Beispiel einzubringen.

## Patentansprüche

1. Knickschutz für ein Kabel, mit:
einer Knickschutztülle (10), die an einem Kabel festlegbar ist, wobei die Knickschutztülle (10) wenigstens ein erstes Rastelement (30) aufweist,
einem ersten Verbindungselement (38), das eine Öffnung (46) zum Durchführen der Knickschutztülle (10) aufweist, wobei das erste Verbindungselement (38) wenigstens ein zweites Rastelement (48) aufweist,
einem zweiten Verbindungselement (56), das mit dem ersten Verbindungselement (38) verbindbar ist,
wobei das wenigstens eine erste Rastelement (30) und das wenigstens eine zweite Rastelement (48) derart ausgebildet sind, dass sie in einer ersten Stellung der Knickschutztülle (10) relativ zu dem ersten Verbindungselement (38) ein Durchführen der Knickschutztülle (10) durch die Öffnung (46) des ersten Verbindungselements (38) zulassen und in einer zweiten Stellung der Knickschutztülle (10) relativ zu dem ersten Verbindungselement (38) miteinander verrastbar sind, wobei die Knickschutztülle (10) Führungsvorsprünge (18, 20, 22, 24) aufweist, die zueinander versetzt sind und zwischen sich wenigstens eine Führungsbahn (26, 32, 34, 36) zum Durchführen des wenigstens einen zweiten Rastelements (48) des ersten Verbindungselements (38) in der ersten Stellung ausbilden, wobei das wenigstens eine erste Rastelement (30) und/oder das wenigstens eine zweite Rastelement (48) derart ausgebildet sind, dass sie in der zweiten Stellung einen in Umfangsrichtung der Knickschutztülle (10) und/oder des ersten Verbindungselements (38) wirkenden Formschluss herstellen.

2. Knickschutz nach Anspruch 1,
wobei das wenigstens eine erste Rastelement (30) und das wenigstens eine zweite Rastelement (48) durch eine Relativbewegung zwischen der Knickschutztülle (10) und dem ersten Verbindungselement (38) aus der ersten Stellung in die zweite Stellung und zurück überführbar sind.

3. Knickschutz nach Anspruch 2,
wobei die Relativbewegung eine Drehbewegung der Knickschutztülle (10) relativ zu dem ersten Verbindungselement (38) oder eine Drehbewegung des ersten Verbindungselements (38) relativ zur Knickschutztülle (10) ist.

4. Knickschutz nach einem der Ansprüche 1 bis 3,
wobei zumindest einer der Führungsvorsprünge (18, 20, 22, 24) der Knickschutztülle (10) wenigstens ein erstes Rastelement (30) aufweist.

5. Knickschutz nach einem der Ansprüche 1 bis 4,
wobei die Führungsvorsprünge (18, 20, 22, 24) einstückig mit der Knickschutztülle (10) ausgebildet sind.

6. Knickschutz nach einem der Ansprüche 1 bis 5,
wobei das wenigstens eine zweite Rastelement (48) ein Rastvorsprung ist, der radial einwärts vorsteht.

7. Knickschutz nach einem der Ansprüche 1 bis 6,
wobei das wenigstens eine erste Rastelement eine Rastausnehmung (30) ist.

8. Verfahren zum Montieren eines Knickschutz für ein Kabel nach einem der Ansprüche 1 bis 7, umfassend die Schritte von:
Verlagern der Knickschutztülle (10) und/oder des ersten Verbindungselements (38) in die erste Stellung, in der das wenigstens eine erste Rastelement (30) und das wenigstens eine zweite Rastelement (48) eine Bewegung der Knickschutztülle (10) durch die Öffnung (46) des ersten Verbindungselements (38) zulassen, wobei die Knickschutztülle (10) Führungsvorsprünge (18, 20, 22, 24) aufweist, die zueinander versetzt sind und zwischen sich wenigstens eine Führungsbahn (26, 32, 34, 36) zum Durchführen des wenigstens einen zweiten Rastelements (48) des ersten Verbindungselements (38) in der ersten Stellung ausbilden;
Bewegen der Knickschutztülle (10) und des damit verbundenen Kabels durch die Öffnung (46) des ersten Verbindungselements (38), wobei sich die Knickschutztülle (10) und das erste Verbindungselement (38) in der ersten Stellung befinden;
Zurückziehen der Knickschutztülle (10) und des Kabels in der ersten Stellung durch die Öffnung (46) in dem ersten Verbindungselement (38), wobei sich die Knickschutztülle (10) und das erste Verbindungselement (38) in der ersten Stellung befinden;
Verlagern der Knickschutztülle (10) und/oder des ersten Verbindungselements (38) in die zweite Stellung, in der das wenigstens eine erste Rastelement (30) und das wenigstens eine zweite Rastelement (48) verrastbar sind, wobei das wenigstens eine erste Rastelement (30) und/oder das wenigstens eine zweite Rastelement (48) derart ausgebildet sind, dass sie in der zweiten Stellung einen in Umfangsrichtung der Knickschutztülle (10) und/oder des ersten Verbindungselements (38) wirkenden Formschluss herstellen;
Verrasten des wenigstens einen ersten Rastelements (30) und des wenigstens einen zweiten Rastelements (48) miteinander; und
Verbinden des ersten Verbindungselements (38) und des zweiten Verbindungselement (56).

## Claims

1. An anti-kink device for a cable, having:
an anti-kink bush (10) which can be secured on a cable, wherein the anti-kink bush (10) has at least one first snap-in element (30),
a first connecting element (38) which has an opening (46) for the passage of the anti-kink bush (10), wherein the first connecting element (38) has at least one second snap-in element (48),
a second connecting element (56) which can be connected to the first connecting element (38),
wherein the at least one first snap-in element (30) and the at least one second snap-in element (48) are in such a form that, in a first position of the anti-kink sleeve (10) relative to the first connecting element (38), they allow the anti-kink bush (10) to be guided through the opening (46) of the first connecting element (38) and, in a second position of the anti-kink bush (10) relative to the first connecting element (38), they can be locked together, wherein the anti-kink bush (10) has guide projections (18, 20, 22, 24) which are offset relative to one another and form between them at least one guideway (26, 32, 34, 36) for the passage of the at least one second snap-in element (48) of the first connecting element (38) in the first position, wherein the at least one first snap-in element (30) and/or the at least one second snap-in element (48) are in such a form that, in the second position, they establish an interlocking connection acting in the peripheral direction of the anti-kink bush (10) and/or of the first connecting element (38).

2. The anti-kink device according to claim 1,
wherein the at least one first snap-in element (30) and the at least one second snap-in element (48) can be transferred out of the first position into the second position and back by a relative movement between the anti-kink bush (10) and the first connecting element (38).

3. The anti-kink device according to claim 2,
wherein the relative movement is a rotational movement of the anti-kink bush (10) relative to the first connecting element (38) or a rotational movement of the first connecting element (38) relative to the anti-kink bush (10).

4. The anti-kink device according to one of the claims 1 to 3,
Wherein at least one of the guide projections (18, 20, 22, 24) of the anti-kink bush (10) has at least one first snap-in element (30).

5. The anti-kink device according to one of the claims 1 to 4,
wherein the guide projections (18, 20, 22, 24) are formed integrally with the anti-kink bush (10).

6. The anti-kink device according to one of the claims 1 to 5,
wherein the at least one second snap-in element (48) is a snap-in projection which protrudes radially inwards.

7. The anti-kink device according to one of the claims 1 to 6,
wherein the at least one first snap-in element is a snap-in recess (30).

8. A method of fitting an anti-kink device for a cable according to any one of claims 1 to 7, comprising the steps of:
displacing the anti-kink bush (10) and/or the first connecting element (38) into the first position, in which the at least one first snap-in element (30) and the at least one second snap-in element (48) allow the anti-kink bush (10) to move through the opening (46) of the first connecting element (38), wherein the anti-kink bush (10) comprises guide projections (18, 20, 22, 24) which are offset relative to one another and form between them at least one guideway (26, 32, 34, 36) for the passage of the at least one second snap-in element (48) of the first connecting element (38) in the first position;
moving the anti-kink bush (10) and the cable connected thereto through the opening (46) of the first connecting element (38), wherein the anti-kink bush (10) and the first connecting element (38) are in the first position;
withdrawing the anti-kink bush (10) and the cable in the first position through the opening (46) in the first connecting element (38), wherein the anti-kink bush (10) and the first connecting element (38) are in the first position;
displacing the anti-kink bush (10) and/or the first connecting element (38) into the second position, in which the at least one first snap-in element (30) and the at least one second snap-in element (48) can be locked together, wherein the at least one first snap-in element (30) and/or the at least one second snap-in element (48) are in such a form that, in the second position, they establish an interlocking connection acting in the peripheral direction of the anti-kink bush (10) and/or of the first connecting element (38);
locking the at least one first snap-in element (30) and the at least one second snap-in element (48) together; and
connecting the first connecting element (38) and the second connecting element (56).

## Revendications

1. Protection anti-pliage pour un câble, comprenant :
un manchon de protection anti-pliage (10) qui peut être fixé à un câble, le manchon de protection anti-pliage (10) comprenant au moins un premier élément d'encliquetage (30),
un premier élément de liaison (38) muni d'une ouverture (46) pour le passage du manchon de protection anti-pliage (10), le premier élément de liaison (38) comprenant au moins un deuxième élément d'encliquetage (48),
un deuxième élément de liaison (56) susceptible d'être relié au premier élément de liaison (38),
dans laquelle ledit au moins un premier élément d'encliquetage (30) et ledit au moins un deuxième élément d'encliquetage (48) sont conçus de telle sorte que, dans une première position du manchon de protection anti-pliage (10) par rapport au premier élément de liaison (38), ils permettent un passage du manchon de protection anti-pliage (10) à travers l'ouverture (46) du premier élément de liaison (38) et, dans une deuxième position du manchon de protection anti-pliage (10) par rapport au premier élément de liaison (38), ils peuvent être encliquetés l'un avec l'autre, le manchon de protection anti-pliage (10) comprenant des saillies de guidage (18, 20, 22, 24) décalées les unes par rapport aux autres et formant entre elles au moins une voie de guidage (26, 32, 34, 36) pour le passage dudit au moins un deuxième élément d'encliquetage (48) du premier élément de liaison (38) dans la première position, dans laquelle ledit au moins un premier élément d'encliquetage (30) et/ou ledit au moins un deuxième élément d'encliquetage (48) sont conçus de telle sorte que, dans la deuxième position, ils créent une liaison par complémentarité de forme agissant dans la direction périphérique du manchon de protection anti-pliage (10) et/ou du premier élément de liaison (38).

2. Protection anti-pliage selon la revendication 1,
dans laquelle ledit au moins un premier élément d'encliquetage (30) et ledit au moins un deuxième élément d'encliquetage (48) peuvent être transférés de la première position à la deuxième position et inversement par un mouvement relatif entre le manchon de protection anti-pliage (10) et le premier élément de liaison (38).

3. Protection anti-pliage selon la revendication 2,
dans laquelle le mouvement relatif est un mouvement de rotation du manchon de protection anti-pliage (10) par rapport au premier élément de liaison (38) ou un mouvement de rotation du premier élément de liaison (38) par rapport au manchon de protection anti-pliage (10).

4. Protection anti-pliage selon l'une des revendications 1 à 3,
dans laquelle au moins l'une des saillies de guidage (18, 20, 22, 24) du manchon de protection anti-pliage (10) présente au moins un premier élément d'encliquetage (30).

5. Protection anti-pliage selon l'une des revendications 1 à 4,
dans laquelle les saillies de guidage (18, 20, 22, 24) sont formées d'une seule pièce avec le manchon de protection anti-pliage (10).

6. Protection anti-pliage selon l'une des revendications 1 à 5,
dans laquelle ledit au moins un deuxième élément d'encliquetage (48) est une saillie d'encliquetage qui fait saillie radialement vers l'intérieur.

7. Protection anti-pliage selon l'une des revendications 1 à 6,
dans laquelle ledit au moins un premier élément d'encliquetage est un évidement d'encliquetage (30).

8. Procédé de montage d'une protection anti-pliage d'un câble selon l'une des revendications 1 à 7, comprenant les étapes consistant à :
transférer le manchon de protection anti-pliage (10) et/ou le premier élément de liaison (38) dans la première position, dans laquelle ledit au moins un premier élément d'encliquetage (30) et ledit au moins un deuxième élément d'encliquetage (48) permettent un déplacement du manchon de protection anti-pliage (10) à travers l'ouverture (46) du premier élément de liaison (38), le manchon de protection anti-pliage (10) comprenant des saillies de guidage (18, 20, 22, 24) décalées les unes par rapport aux autres et formant entre elles au moins une voie de guidage (26, 32, 34, 36) pour le passage dudit au moins un deuxième élément d'encliquetage (48) du premier élément de liaison (38) dans la première position ;
déplacer le manchon de protection anti-pliage (10) et le câble relié à celui-ci à travers l'ouverture (46) du premier élément de liaison (38), le manchon de protection anti-pliage (10) et le premier élément de liaison (38) se trouvant dans la première position ;
retirer le manchon de protection anti-pliage (10) et le câble dans la première position à travers l'ouverture (46) dans le premier élément de liaison (38), le manchon de protection anti-pliage (10) et le premier élément de liaison (38) se trouvant dans la première position ;
transférer le manchon de protection anti-pliage (10) et/ou le premier élément de liaison (38) dans la deuxième position, dans laquelle ledit au moins un premier élément d'encliquetage (30) et ledit au moins un deuxième élément d'encliquetage (48) peuvent être encliquetés, ledit au moins un premier élément d'encliquetage (30) et/ou ledit au moins un deuxième élément d'encliquetage (48) étant conçus de telle sorte que, dans la deuxième position, ils créent une liaison par complémentarité de forme agissant dans la direction périphérique du manchon de protection anti-pliage (10) et/ou du premier élément de liaison (38) ;
encliqueter ledit au moins un premier élément d'encliquetage (30) et ledit au moins un deuxième élément d'enclenchement (48) l'un avec l'autre ; et
relier le premier élément de liaison (38) et le deuxième élément de liaison (56).
